# EUROPEAN PATENT APPLICATION

(11) **EP 3 904 666 A1**
(43) Date of publication of application: **03.11.2021**
(21) Application number: 21171096.7
(22) Date of filing: 29.04.2021
(51) Int. Cl.: F02M 35/02, F02M 35/024

(54) **FILTER DEVICE AND ALL-TERRAIN VEHICLE**

(30) Priority: 29.04.2020 CN 202020696540 U
(71) Applicant: Segway Technology Co., Ltd., Jiangsu 213000 (CN)
(72) Inventor: QUE, Weigang, Changzhou, 213000 (CN); CHEN, Mingtang, Changzhou, 213000 (CN)
(74) Representative: Studio Torta S.p.A.

(57) **Abstract**

Embodiments of the present application disclose a filter device and an all-terrain vehicle. The filter device includes: a body having an accommodating chamber and a mounting port in communication with the accommodating chamber; a filter assembly provided in the accommodating chamber, the accommodating chamber being provided with a first support portion therein, the first support portion supporting a first end of the filter assembly, the accommodating chamber being divided into an intake chamber and an outtake chamber by filter assembly; and an end cap member detachably provided to mounting port, an inner side of the end cap member being provided with a second support portion, the second support portion supporting a second end of the filter assembly.

## Description

### FIELD

The present application relates to a filter device and an all-terrain vehicle.

### BACKGROUND

A filter device is a commonly used device for an all-terrain vehicle. The all-terrain vehicle filters air through the filter device. However, in the related art, a filter assembly in the filter device is secured between an upper casing and a lower casing. When the filter assembly needs to be maintained and replaced, the upper casing and the lower casing need to be separated first, and then the filter device is taken out for maintenance and replacement. The operation is complex.

### SUMMARY

In view of this, embodiments of the present application are intended to provide a filter device and an all-terrain vehicle.

The present invention is defined in the independent claim 1, and the preferable features according to the present invention are defined in the dependent claims. Any embodiment in the present disclosure that does not fall within the scope of the present invention should be regarded as an example for understanding the present invention.

To this end, a technical solution of the present application is implemented such that:
Embodiments of the present application provide a filter device, including: a body an accommodating chamber and a mounting port in communication with the accommodating chamber; a filter assembly provided in the accommodating chamber, the accommodating chamber being provided with a first support portion therein, the first support portion supporting a first end of the filter assembly; the accommodating chamber being divided into an intake chamber and an outtake chamber by the filter assembly; and an end cap member detachably provided to the mounting port, an inner side of the end cap member being provided with a second support portion, the second support portion supporting a second end of the filter assembly.

In some optional implementations, the first support portion is a first projection coupled to an inner wall of the accommodating chamber, and the second support portion is a second projection extending from the inner side of the end cap member towards an inside of the accommodating chamber .

In some optional implementations, the filter assembly includes a filter member, a support member supporting the filter member, and a seal member provided to the filter member; a first end of the support member is supported on the first projection, a second end of the support member is supported on the second projection, and the seal member abuts against an inner peripheral wall of the accommodating chamber.

In some optional implementations, wherein the inner peripheral wall of the accommodating chamber is provided with a circumferential sealing face, the sealing face is located at a side of the first support portion, and the seal member abuts against the sealing face.

In some optional implementations, the first projection has an L shape, a top end of a vertical portion of the first projection is coupled to the inner peripheral wall of the accommodating chamber, an end of a horizontal portion of the first projection is coupled to a bottom end of the vertical portion, the vertical portion abuts against an end face of the first end of the support member, and the horizontal portion supports the first end of the support member.

In some optional implementations, the first projection further comprises an inclined portion coupled to the other end of the horizontal portion, and the inclined portion has an inclined face.

In some optional implementations, the inclined face is arc.

In some optional implementations, the support member is provided with a handle portion, and the handle portion is located at a side of the mounting port.

In some optional implementations, a surface of the body is provided with a snap slot, the end cap member comprises an end cap portion and a snap hook coupled to the end cap portion, the snap hook matches the snap slot, and the snap hook is snap-fitted in the snap slot; an inner side of the end cap portion is provided with the second support portion supporting the second end of the filter assembly.

Embodiments of the present application provide an all-terrain vehicle, including a frame and a filter device of embodiments of the present application embodiment, the filter device being secured to the frame.

In the filter device of the embodiments of the present application, the body has the mounting port, the filter assembly is provide in the accommodating chamber, the accommodating chamber is provided with the first support portion therein, and the first support portion supports the first end of the filter assembly; the end cap member is detachably provided to the mounting port, the inner side of the end cap member is provided with the second support portion, and the second portion supports the second end of the filter assembly. When the filter assembly needs to be maintained and replaced, the filter assembly can be detached from the mounting port, to achieve rapid maintenance and replacement of the filter assembly; when the maintenance and replacement of the filter assembly is completed, the filter assembly can be provided in the accommodating chamber through the mounting port, the operation is simple, and the maintenance and replacement are convenient.

### BRIEF DESCRIPTION OF THE DRAWINGS

FIG. 1 is a section view of an optional structure of a filter device according to an embodiment of the present application, in which an arrow direction is an air flow direction;
FIG. 2 is a schematic view of an optional structure of a filter device according to an embodiment of the present application;
FIG. 3 is an explored view of an optional structure of a filter device according to an embodiment of the present application; and
FIG. 4 is a schematic view of an optional structure of a filter device according to an embodiment of the present application.

### DETAILED DESCRIPTION OF THE DISCLOSURE

The present application will be further described in detail below in combination the accompanying drawings and specific embodiments. It should be understood that, the specific embodiments described herein are only used to explain the present application, but not to limit the present application.

In the embodiments of the present application, it should be noted that, unless specified or limited otherwise, the term "connected" is used broadly, and may be, for example, electrical connections; may also be inner communications of two elements; may also be direct connections or indirect connections via intervening structures; which can be understood by those skilled in the art according to specific situations.

It should be noted that, the terms "first\second\third" involved in the embodiments of the present application are merely used to distinguish similar objects, and do not represent a particular sort of the objects. It should be understood that, particular order and precedence sequence for the terms "first\second\third" can be exchanged if permitted. It should be understood that, the objects distinguished by "first\second\third" can be exchanged under appropriate circumstances, such that the embodiments of the present application described herein can be implemented in orders in addition to those illustrated or described herein.

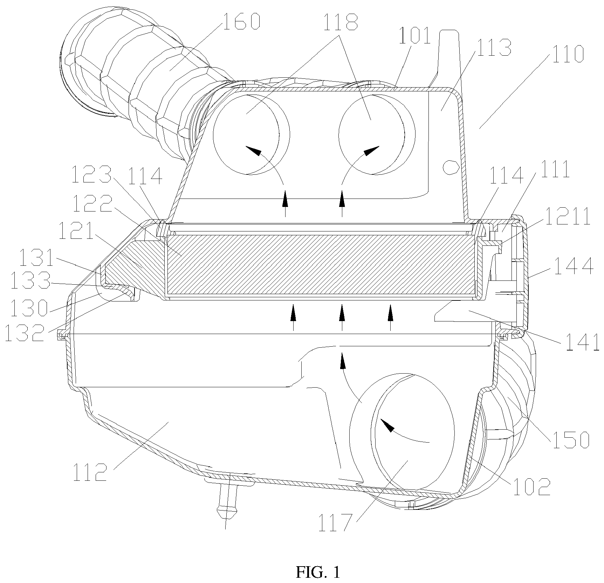

It should be noted that the embodiments in the present disclosure and the features in the embodiments may be combined with each other without conflict. A filter device recited in embodiments of the present application will be described below in detail with reference to FIGS. 1 to 4.

The filter device includes a body, the body 110 having an accommodating chamber and a mounting port 111 in communication with the accommodating chamber; a filter assembly provided in the accommodating chamber, the being provided with a first support portion 130 therein, the first support portion 130 supporting a first end of the filter assembly; the accommodating chamber being divided into an intake chamber 112 and an outtake chamber 113 by the filter assembly; and an end cap member detachably provided to the mounting port 111, an inner side of the end cap member is provided with a second support portion 141, the second support portion 141 supporting a second end of the filter assembly. When the filter assembly needs to be maintained and replaced, the filter assembly can be detached from the mounting port 111, such that rapid maintenance and replacement of the filter assembly can be realized; when the maintenance and replacement of the is completed, the filter assembly can be provided in the accommodating chamber through the mounting port 111, the operation is simple, and the maintenance and the replacement are convenient.

In embodiments of the present application embodiment, the structure of the body 110 is not limited, as long as the body 110 has the accommodating chamber and the mounting port 111, and the mounting port 111 is in communication with the accommodating chamber. For example, the body 110 may have an integrated structure. For another example, as illustrated in FIGS. 1 to 4, the body 110 includes an upper casing 101 and a lower casing 102, and the upper casing 101 and the lower casing 102 are coupled to form the body 110. When the body 110 includes the upper casing 101 and the lower casing 102, the mounting port 111 may be provided to the upper casing 101, or may be provided to the lower casing 102. As an example, as illustrated in FIG. 1, the mounting port 111 is provided to the upper casing 101.

Herein, the accommodating chamber is provided with the first support portion 130 therein, and the first support portion 130 supports the first end of the filter assembly; the accommodating chamber is divided into the intake chamber 112 and the outtake chamber 113 by the filter assembly; when air in the intake chamber 112 enters the outtake chamber 113 through the filter assembly, the air is filtered.

In embodiments of the present application embodiment, the end cap member is detachably provided to the mounting port 111, and the inner side of the end cap member is provided with the second support portion 141, and the second support portion 141 supports the second end of the filter assembly; thus, the first end of the filter assembly and the second end of the filter assembly are cooperatively supported by the first support portion 130 and the second support portion 141. Herein, the end cap member not only serves as an end cap detachably provided to the mounting port 111, but also functions as a support structure for supporting the filter assembly, thereby greatly simplifying the structure of the filter device.

Herein, the first end of the filter assembly and the second end of the filter assembly may be opposite ends of the filter assembly.

In embodiments of the present application embodiment, the structure of the filter assembly is not limited, as long as the filter assembly can filter the air.

For example, the filter assembly includes a filter member 122, a support member 121 supporting the filter member 122, and a seal member 123 provided to filter member 122. The seal member 123 abuts against an inner peripheral wall of the accommodating chamber, to seal between the intake chamber and the outtake chamber. Through the seal member 123, the air in the intake chamber 112 is completely filtered by the filter member 122, and then enters the outtake chamber 113, improving the filtering effect of the filter device.

In the present example, the structure of the support member 121 is not limited, as long as the filter member 122 can be supported. For example, the support member 121 may have a frame-like structure, or may have a mesh-like structure.

As an example, the support member 121 may be provided with a handle portion 1211, and the handle portion 1211 is located at a side of the mounting port 111, such that the support member 121 can be mounted and demounted by holding the handle portion 1211.

In the present example, as long as the air can be filtered, the structure of the filter member 122 is not limited, and can be chosen by those skilled in the art according to actual needs. For example, the filter member 122 may be filter paper, or may be non-woven cloth and the like.

Herein, the implementation of the provision of the filter member 122 on the support member 121 is not limited. For example, the filter member 122 may be snap-fitted in a fixing groove of the support member 121.

In the present example, the structure of the seal member 123 is not limited. For example, the seal member 123 has an annular structure, such that one seal member 123 can achieve sealing of all faces between the support member 121 and an inner wall face of the accommodating chamber. Certainly, the seal member 123 may have a strip-like structure, and a plurality of seal members 123 having the strip-like structure can achieve the sealing of all faces between the support member 121 and a sealing face 114 of the accommodating chamber.

Herein, the material of the seal member 123 is not limited. For example, the seal member 123 may be elastic. As an example, the seal member 123 may be a rubber member. For another example, the seal member 123 may also be inelastic. For example, the seal member 123 may be polytetrafluoroethylene, or may be nylon.

Herein, the inner peripheral wall of the accommodating chamber may be provided with a circumferential sealing face 114, the sealing face 114 is located at a side of the first support portion 130, and the seal member 123 abuts against the sealing face 114, to improve the sealing effect of the seal member 123.

In some optional implementations of embodiments of the present application, the first support portion 130 is a first projection coupled to an inner wall of the accommodating chamber, and the second support portion 141 is a second projection extending from an inner side of the end cap member towards the inside of the accommodating chamber. Thus, the filter assembly is supported by the first projection and the second projection.

In the present implementation, when the filter assembly includes the filter member 122, the support member 121 supporting the filter member 122, and the seal member 123 provided to the filter member 122, a first end of the support member 121 is supported on the first projection, and a second end of the support member 121 is supported on the second projection.

In the present implementation, the structure of the first projection is not limited.

For example, as illustrated in FIG. 1, the first projection may have an L shape. a top end of a vertical portion 131 of the first projection is coupled to the inner peripheral wall of the accommodating chamber, an end of a horizontal portion 133 of the first projection is coupled to a bottom end of the vertical portion 131, the vertical portion 131 abuts against an end face of the first end of support member 121, and the horizontal portion 133 supports the first end of the support member 121. Thus, the vertical portion 131 can limit a position of the first end of the support member 121 in the accommodating chamber; at the same time, the abutment between the vertical portion 131 and the end face of the first end of the support member 121 can also have a sealing effect between the intake chamber and the outtake chamber; and the first end of the support member 121 is supported by the horizontal portion 133.

In the present example, the first projection may further include an inclined portion 132 coupled to the other end of the horizontal portion 133, and the inclined portion 132 has an inclined face, to provide guidance for the first end of the support member 121 through the inclined face, and to facilitate mounting of the support member 121.

Herein, the inclined face may be arc. Certainly, the inclined face may also be flat.

In some optional implementations of embodiments of the present application, a surface of the body 110 is provided with a snap slot, the end cap member includes an end cap portion 144 and a snap hook coupled to the end cap portion. The snap hook 143 matches the snap slot, and the snap hook 143 is snap-fitted in the snap slot. An inner side of the end cap portion144 is provided with the second support portion 141 supporting the second end of the filter assembly. Thus, the snap hook 143 is snap-fitted in the snap slot to achieve fixed coupling of the end cap member and the body 110, and it is ensured that the end cap member is stably provided at the mounting port 111, and the second support portion 141 can also stably support the filter assembly.

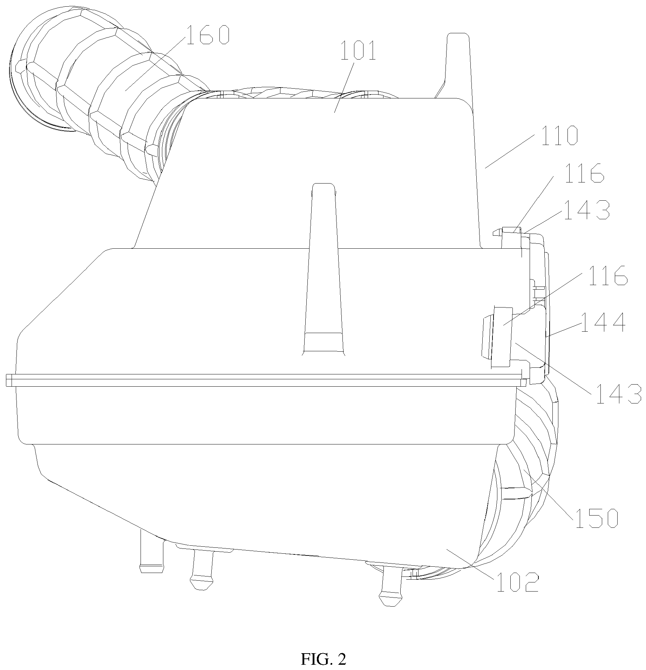

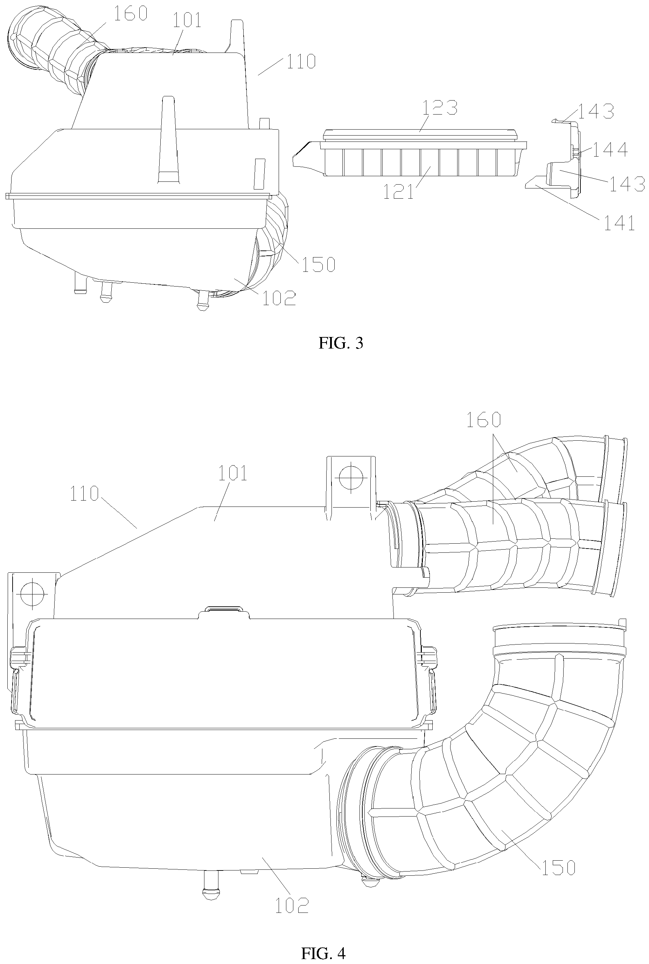

In the present implementation, the number of the snap hooks 143 is not limited. As an example, as illustrated in FIG. 3, two snap hooks 143 are provided. Herein, the arranged position of the snap slot is not limited. As an example, as illustrated in FIG. 2, the snap slot is provided in a third projection 116 of a surface of the body 110. For another example, fixed coupling between the end cap member and the body 110 can also be achieved through a bolt.

In some optional implementations of embodiments of the present application, as illustrated in FIG. 1, the body 110 has an air intake 117 and an air outtake 118. The air intake 117 is located in a bottom side of the body 110, and the air intake 117 is in communication with the intake chamber 112. The air outtake 118 is located in a top side of the body 110, and the air outtake 118 is in communication with the outtake chamber 113. Thus, the air is guided into the intake chamber 112 through the air intake 117, and the filtered air is guided out from outtake chamber 113 the through the air outtake 118.

In the present implementation, the number of the air intakes 117 and the air outtakes 118 is not limited. For example, as illustrated in FIG. 1, one air intake 117 is provided, and two air outtakes 118 are provided.

In the present implementation, as illustrated in FIG. 4, the filter device may also include an intake pipe 150 and an outtake pipe 160. The intake pipe 150 is in communication with the air intake 117, and the outtake pipe 160 is in communication with the air outtake 118. Thus, the air is guided into the intake chamber 112 through the intake pipe 150 and the air intake 117, and the filtered air is guided out from the outtake chamber 113 through the air outtake 118 and the outtake pipe 160.

In the filter device of the embodiments of the present application, the body 110 has the mounting port 111, the filter assembly is provide in the accommodating chamber, the accommodating chamber is provided with the first support portion 130 therein, and the first support portion 130 supports the first end of the filter assembly; the end cap member is detachably provided to the mounting port 111, the inner side of the end cap member is provided with the second support portion 141, and the second portion 141 supports the second end of the filter assembly. When the filter assembly needs to be maintained and replaced, the filter assembly can be detached from the mounting port 111, to achieve rapid maintenance and replacement of the filter assembly; when the maintenance and replacement of the filter assembly is completed, the filter assembly can be provided in the accommodating chamber through the mounting port 111, the operation is simple, and the maintenance and replacement are convenient.

The present application embodiment further recites an all-terrain vehicle. The all-terrain vehicle includes a frame and a filter device of embodiments of the present application, and the filter device is secured to the frame.

## Claims

1. A filter device, comprising:
a body (110) having an accommodating chamber and a mounting port (111) in communication with the accommodating chamber;
a filter assembly provided in the accommodating chamber, the accommodating chamber being provided with a first support portion (130) therein, the first support portion (130) supporting a first end of the filter assembly; the accommodating chamber being divided into an intake chamber (112) and an outtake chamber (113) by the filter assembly; and
an end cap member detachably provided to the mounting port (111), an inner side of the end cap member being provided with a second support portion (141), the second support portion (141) supporting a second end of the filter assembly.

2. The filter device according to claim 1, wherein the first support portion (130) is a first projection coupled to an inner wall of the accommodating chamber, and the second support portion (141) is a second projection extending from the inner side of the end cap member towards an inside of the accommodating chamber.

3. The filter device according to claim 2, wherein the filter assembly comprises a filter member (122), a support member (121) supporting the filter member (122), and a seal member (123) provided to the filter member (122); a first end of the support member (121) is supported on the first projection, a second end of the support member (121) is supported on the second projection, and the seal member (123) abuts against an inner peripheral wall of the accommodating chamber.

4. The filter device according to claim 3, wherein the inner peripheral wall of the accommodating chamber is provided with a circumferential sealing face (114), the sealing face (114) is located at a side of the first support portion (130), and the seal member (123) abuts against the sealing face (114).

5. The filter device according to claim 3 or 4, wherein the first projection has an L shape, a top end of a vertical portion (131) of the first projection is coupled to the inner peripheral wall of the accommodating chamber, an end of a horizontal portion (133) of the first projection is coupled to a bottom end of the vertical portion (131), the vertical portion (131) abuts against an end face of the first end of the support member (121), and the horizontal portion (133) supports the first end of the support member (121).

6. The filter device according to claim 5, wherein the first projection further comprises an inclined portion (132) coupled to the other end of the horizontal portion (133), and the inclined portion (132) has an inclined face.

7. The filter device according to claim 6, wherein the inclined face is arc.

8. The filter device according to any one of claims 3 to 7, wherein the filter member (122) is snap-fitted in a fixing groove of the support member (121).

9. The filter device according to any one of claims 3 to 8, wherein the support member (121) is provided with a handle portion (1211), and the handle portion (1211) is located at a side of the mounting port (111).

10. The filter device according to any one of claims 1 to 9, wherein a surface of the body (110) is provided with a snap slot, the end cap member comprises an end cap portion (144) and a snap hook (143) coupled to the end cap portion (144), the snap hook (143) matches the snap slot, and the snap hook (143) is snap-fitted in the snap slot; an inner side of the end cap portion (144) is provided with the second support portion (141) supporting the second end of the filter assembly.

11. The filter device according to claim 10, wherein the snap slot is provided in a third projection (116) of a surface of the body (110).

12. The filter device according to any one of claims 1 to 11, wherein the body (110) has an air intake (117) located in a bottom side of the body (110) and an air outtake (118) located in a top side of the body (110), the air intake (117) is in communication with the intake chamber (112), and the air outtake (118) is in communication with the outtake chamber (113).

13. The filter device according to claim 12, wherein the filter device further comprises an intake pipe (150) in communication with the air intake (117) and an outtake pipe (160) in communication with the air outtake (118).

14. The filter device according to any one of claims 1 to 13, wherein the first end of the filter assembly and the second end of the filter assembly are opposite ends of the filter assembly.

15. An all-terrain vehicle, comprising a frame and a filter device according to any one of claims 1 to 14, the filter device being secured to the frame.
